# FASCICULE DE BREVET EUROPEEN

(11) **EP 0 825 838 B1**
(45) Date de publication et mention de la délivrance du brevet: **26.01.2000**
(21) Numéro de dépôt: 96917536.3
(22) Date de dépôt: 23.05.1996
(51) Int. Cl.: A61C 8/00

(54) **EQUIPEMENT CHIRURGICAL D'IMPLANTOLOGIE DENTAIRE ET ELEMENTS, IMPLANT DENTAIRE ET INSTRUMENTS DE FORAGE, CONSTITUTIFS**
CHIRURGISCHE AUSRÜSTUNG FÜR DIE ZAHNIMPLANTOLOGIE, ZAHNIMPLANTAT, BOHRINSTRUMENT UND BESTANDTEILE
SURGICAL EQUIPMENT FOR IMPLANTING DENTAL IMPLANTS AND ITS CONSTITUTIVE ELEMENTS, DENTAL IMPLANTS, BORING INSTRUMENTS AND THEIR CONSTITUTIVE ELEMENTS

(30) Priorité: 30.05.1995 FR 9506627
(43) Date de publication de la demande: 04.03.1998
(73) Titulaire: Guedj, Léon, 31500 Toulouse (FR)
(72) Inventeur: Guedj, Léon, 31500 Toulouse (FR)
(74) Mandataire: Cabinet BARRE LAFORGUE & associés
(86) Numéro de dépôt international: FR9600771
(87) Numéro de publication internationale: WO9638098

(56) Documents cités:
- EP-A- 0 412 845
- FR-A- 2 571 607
- FR-A- 2 610 820
- GB-A- 2 119 258

## Description

L'invention vise un équipement chirurgical d'implantologie dentaire et un implant dentaire endo-osseux.

Une technique classique utilisée pour la pose d'implants, dans le domaine dentaire, consiste principalement, dans un premier temps, à réaliser au moyen de forets de diamètres croissants une loge implantaire de dimensions conjuguées de celles de l'implant, à fileter cette loge au moyen d'un taraud, et à venir visser ledit implant dans ladite loge. Dans un deuxième temps, après une période, dite de mise en nourrice, de quatre à six mois, au cours de laquelle s'effectue la cicatrisation osseuse, un pilier ou moignon destiné à servir de support à la prothèse est solidarisé à l'implant.

Une des conditions du succès en implantologie étant l'obtention d'un contact intime entre l'os et l'implant immédiatement après la chirurgie, une des phases délicates de cette technique consiste à réaliser une loge implantaire parfaitement calibrée aux dimensions de l'implant.

Or, dans la pratique, malgré l'utilisation d'une instrumentation parfaitement calibrée et la minutie des praticiens, il s'avère difficile de réaliser une cavité parfaitement adaptée aux dimensions de l'implant, et une source d'échecs, en implantologie, résulte donc d'une mauvaise immobilisation immédiate dudit implant.

Pour tenter de pallier cet inconvénient, une nouvelle technique a consisté à réaliser des implants autotaraudants tels que par exemple celui décrit dans le brevet EP 237.505 qui comporte trois arêtes longitudinales de coupe ménagées vers l'extrémité distale dudit implant, délimitant chacune une cavité externe ménagée de façon à permettre de recueillir les copeaux osseux lors de la mise en place.

De par leur caractère autotaraudant, de tels implants permettent d'obtenir un meilleur contact intime avec l'os et par conséquent d'augmenter la stabilité primaire desdits implants. Toutefois, malgré la présence des cavités externes de réception des copeaux osseux, de tels implants peuvent provoquer une compression de la matière osseuse découpée ayant pour conséquence une nécrose des cellules osseuses. De plus, la technique opératoire de mise en place d'un tel implant s'avère relativement complexe et délicate. En effet, cette mise en place impose de réaliser notamment un pré-forage, un premier forage au moyen par exemple d'un foret de 2 mm, un autre pré-forage à l'aide d'un instrument comportant une pointe mousse de 2 mm de diamètre suivie d'une partie tranchante de 3 mm de diamètre, un deuxième forage au moyen d'un foret de 3 mm, et un évasement à l'aide d'une fraise spéciale dite à "counter-sink". Dans la pratique, le temps opératoire requis pour la mise en place chirurgicale d'un implant s'avère important. De plus, la multiplication des interventions à effectuer s'avère une source non négligeable d'erreurs potentielles concernant notamment la géométrie de la cavité.

Le document EP-A-0 412 845 décrit un implant dentaire autotaraudant et un foret.

Les documents FR-A-2 610 820 et WO-A-9 422 389 décrivent un implant dentaire avec un orifice taraudé apte à permettre la mise en place d'un moignon par rissage.

La présente invention vise à pallier l'ensemble des inconvénients précités des techniques chirurgicales de pose d'implants dentaires et a pour objectif essentiel de fournir un équipement chirurgical permettant, d'une part, de simplifier notablement la technique opératoire de pose des implants et, d'autre part, de réaliser un contact intime os/implant au moment même de la chirurgie.

A cet effet, l'invention vise un équipement chirurgical comportant un instrument de forage et un implant dentaire endo-osseux, selon lequel :
- l'implant dentaire endo-osseux comprend :
   ∗ un tronçon proximal comportant un organe de coopération avec un outil de pose dudit implant, et un orifice supérieur taraudé apte à permettre la mise en place d'un moignon,
   ∗ un tronçon distal tubulaire comprenant une paroi cylindrique de révolution autour d'un axe délimitant un volume interne d'emmagasinage de la matière osseuse, et présentant une extrémité distale d'épaisseur "e" formant une base transversale annulaire de diamètre interne "d" et de diamètre externe "d+2e", ladite paroi cylindrique comportant au moins une échancrure distale formant une arête de coupe frontale au droit de la base annulaire, délimitée par ladite base annulaire et une des faces de ladite échancrure conformées de façon à définir respectivement une face de dépouille et une face d'attaque,
   ∗ un filetage externe comportant au moins une arête distale de coupe, ménagé sur ledit implant dentaire et démarrant à distance de la base annulaire du tronçon distal,
- l'instrument de forage comporte un foret étagé présentant un tronçon distal de diamètre compris entre "d" et "d+2e" et un tronçon proximal de diamètre au moins égal à "d+2e" et inférieur au diamètre externe du filetage de l'implant dentaire.

Un tel équipement chirurgical nécessite simplement, en vue de la pose d'un implant, de réaliser une pré-loge implantaire au moyen du foret étagé conforme à l'invention dont la partie distale est adaptée pour former un alésage de diamètre inférieur au diamètre externe du tronçon distal, et dont le tronçon supérieur est adapté pour former un alésage de diamètre au moins égal à ce diamètre dans la partie corticale très dense et dure de l'os. Il est à noter que cette mise en place peut toutefois nécessiter de réaliser, en premier lieu, un préforage au moyen d'un foret classique par exemple de 2 mm.

Une fois cette pré-loge implantaire réalisée en une ou deux intervention(s) seulement, l'implant peut être mis en place directement, étant conçu pour réaliser, lors de son implantation, d'une part un alésage de la portion inférieure de la pré-loge implantaire forée initialement par le tronçon distal du foret étagé, au cours duquel la matière osseuse découpée par chaque arête frontale de coupe vient s'emmagasiner à l'intérieur du tronçon distal dudit implant, et d'autre part un autotaraudage.

La technique opératoire de pose des implants conformes à l'invention s'avère donc très simple et très rapide puisqu'elle ne requiert qu'une ou deux intervention(s) principale(s) préliminaire(s) à la mise en place des implants.

De plus, de par sa conception, l'implant dentaire selon l'invention qui a une double action d'alésage avec emmagasinage de la matière osseuse découpée et d'autotaraudage, permet d'obtenir un contact intime avec l'os et une stabilité primaire optimaux sans provoquer de compression de la matière osseuse découpée qui risquerait d'entraîner une nécrose des cellules osseuses. De ce fait, il permet, en premier lieu, de diminuer les risques d'échecs de l'opération d'implantation. De plus, il provoque une rapide ostéo-intégration qui autorise une diminution du temps de mise en nourrice.

Selon une autre caractéristique de l'invention, le tronçon proximal de l'implant dentaire comporte une portion d'extrémité supérieure évasée présentant une forme tronconique, et le foret étagé comporte un tronçon supérieur, prolongeant le tronçon proximal, de forme tronconique conjuguée de celle de l'implant dentaire.

Cette forme tronconique du tronçon supérieur du foret permet de créer un évasement de l'extrémité de la pré-loge implantaire présentant une forme identique à celle de la portion supérieure de l'implant dentaire, qui forme avantageusement un orifice de guidage dudit implant lors de sa mise en place.

De plus, un tel évasement permet d'obtenir, une fois l'implant dentaire mis en place, un contact intime os/portion supérieure dudit implant qui garantit contre toute pénétration bactérienne.

Selon une autre caractéristique de l'invention, la paroi cylindrique du tronçon distal de l'implant dentaire présente une extrémité distale biaise formant une base annulaire inclinée transversalement en direction du volume interne délimité par ladite paroi périphérique.

Cette forme biaise de la base annulaire comportant les arêtes de coupe frontales a pour avantage de guider les copeaux osseux en direction du volume interne d'emmagasinage de l'implant dentaire.

Dans le même but, le volume interne d'emmagasinage présente avantageusement à partir de la base annulaire, une portion de volume de forme tronconique évasée en direction de ladite base annulaire.

De plus, afin d'augmenter l'efficacité de la découpe frontale de l'implant dentaire, la paroi cylindrique du tronçon distal comprend avantageusement deux échancrures ménagées symétriquement l'une de l'autre par rapport à l'axe longitudinal dudit implant dentaire, la base annulaire présentant entre chacune desdites échancrures une forme hélicoïdale formant une face de dépouille pour chaque arête de coupe frontale.

Selon une autre caractéristique de l'invention, la paroi cylindrique du tronçon distal comporte au moins une goujure longitudinale ménagée sur la face externe de ladite paroi, de section transversale adaptée pour former une arête de coupe longitudinale.

Chacune des goujures présente donc une arête de coupe longitudinale par exemple droite ou hélicoïdale, qui permet d'initier l'action d'autotaraudage de l'implant dentaire. De plus, de telles goujures forment une chambre externe qui permet de recueillir les copeaux osseux résultant de cet autotaraudage.

Chacune de ces goujures peut en outre s'étendre soit à partir de la base annulaire de la paroi cylindrique en position angulaire décalée par rapport à chaque échancrure, soit dans le prolongement d'une desdites échancrures.

Par ailleurs, selon une autre caractéristique de l'invention, le filetage externe présente, à partir de son extrémité distale, des premiers filets de section trapézoïdale prolongés par des filets de section triangulaire, formant un filetage de section progressive.

De plus, les filets de ce filetage externe sont préférentiellement espacés de façon à délimiter des sillons de section trapézoïdale.

Ces formes du filetage externe permettent en effet, d'une part, d'obtenir un autotaraudage progressif et, d'autre part, de découper un minimum de matière osseuse tout en garantissant une parfaite rétention de l'implant dans la loge implantaire, du fait de l'espacement des filets.

Selon une autre caractéristique de l'invention, la paroi cylindrique du tronçon distal comporte des orifices de calage secondaire circulaires dont l'axe est non sécant par rapport à l'axe de révolution dudit implant.

Outre leur fonction classique de calage secondaire, de tels orifices possèdent, grâce à leur position excentrée par rapport à un plan diamétral de l'implant, des arêtes de coupe complémentaires au passage des filets du filetage externe permettant de parfaire l'alésage de la loge implantaire.

De plus, l'axe de chacun de ces orifices de calage secondaire est avantageusement incliné en direction du tronçon proximal dudit implant dentaire, de façon à amener les copeaux à pénétrer naturellement dans le volume interne d'emmagasinage.

Par ailleurs, concernant l'organe de coopération du tronçon proximal de l'implant dentaire, ce dernier peut avantageusement consister de façon classique en une tête de section polygonale.

Selon une variante de réalisation, l'orifice supérieur consiste en une empreinte taraudée de forme conçue pour faire également office de réservation adaptée pour coopérer avec un outil de pose dudit implant.

Cette disposition qui consiste à regrouper, au niveau d'une portion unique du tronçon proximal, deux zones qui se trouvent actuellement dans le prolongement l'une de l'autre, permet en effet, pour une même longueur d'implant, d'augmenter le volume interne d'emmagasinage de ce dernier.

L'invention s'étend à un implant dentaire endo-osseux comprenant :
- un tronçon proximal comportant un organe de coopération avec un outil de pose dudit implant, et un orifice supérieur taraudé apte à permettre la mise en place d'un moignon,
- un tronçon distal tubulaire comprenant une paroi cylindrique de révolution autour d'un axe délimitant un volume interne d'emmagasinage de la matière osseuse, et présentant une extrémité distale d'épaisseur "e" formant une base transversale annulaire de diamètre interne "d" et de diamètre externe "d+e", ladite paroi cylindrique comportant au moins une échancrure distale formant une arête de coupe frontale au droit de la base annulaire, délimitée par ladite base annulaire et une des faces de ladite échancrure conformées de façon à définir respectivement une face de dépouille et une face d'attaque,
- un filetage externe comportant au moins une arête distale de coupe, ménagé sur ledit implant dentaire et démarrant à distance de la base annulaire du tronçon distal.

Le foret pour la réalisation d'une loge implantaire destinée à la mise en place d'un implant osseux, comporte un tronçon distal de diamètre prédéterminé, et un tronçon proximal de diamètre supérieur à celui du tronçon distal.

D'autres caractéristiques, buts et avantages de l'invention ressortiront de la description détaillée qui suit en référence aux dessins annexés qui en représentent à titre d'exemples non limitatifs deux modes de réalisation préférentiels. Sur ces dessins qui font partie intégrante de l'invention :
- la figure 1 est une vue en perspective d'un premier mode de réalisation d'un implant dentaire conforme à l'invention,
- la figure 2 en est une coupe longitudinale axiale,
- la figure 3 en est une coupe transversale par un plan A,
- la figure 4 en est une vue longitudinale de profil,
- la figure 5 est une coupe longitudinale par un plan axial B d'un deuxième mode de réalisation d'un implant dentaire conforme à l'invention,
- la figure 6 en est une vue de dessus,
- la figure 7 en est une coupe transversale par un plan C,
- les figures 8 et 9 sont deux vues longitudinales décalées de 90 degrés d'un foret étagé,
- et les figures 10a à 10d sont des vues schématiques représentant les différentes phases de la mise en place d'un implant conforme à l'invention.

Les implants dentaires représentés aux figures présentent la particularité de présenter deux arêtes de coupe frontales permettant de réaliser un alésage calibré de la loge implantaire au cours duquel la matière osseuse vient s'emmagasiner à l'intérieur de ces implants, et un filetage externe permettant de réaliser un autotaraudage.

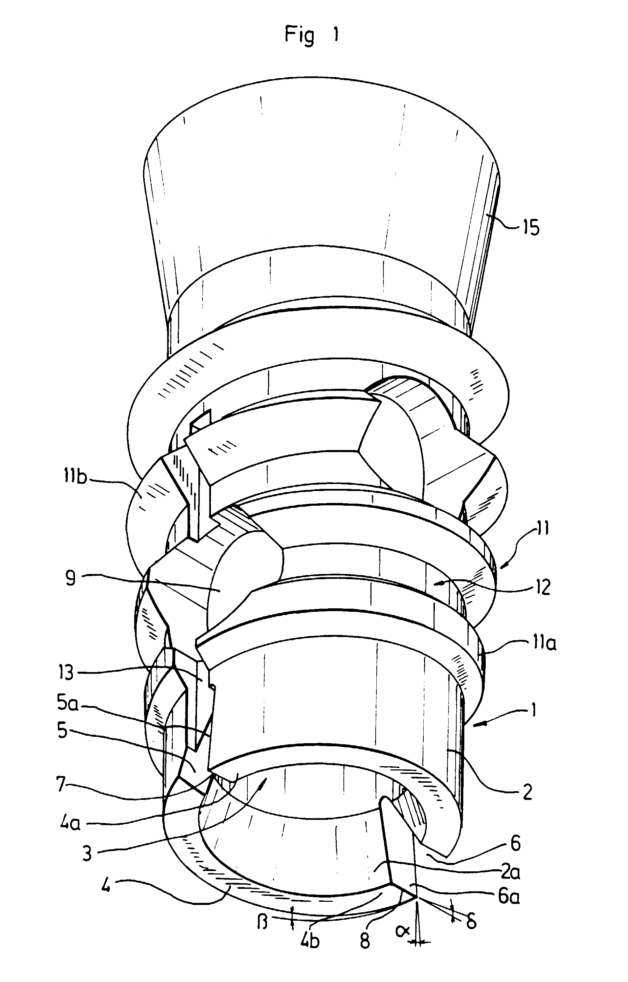

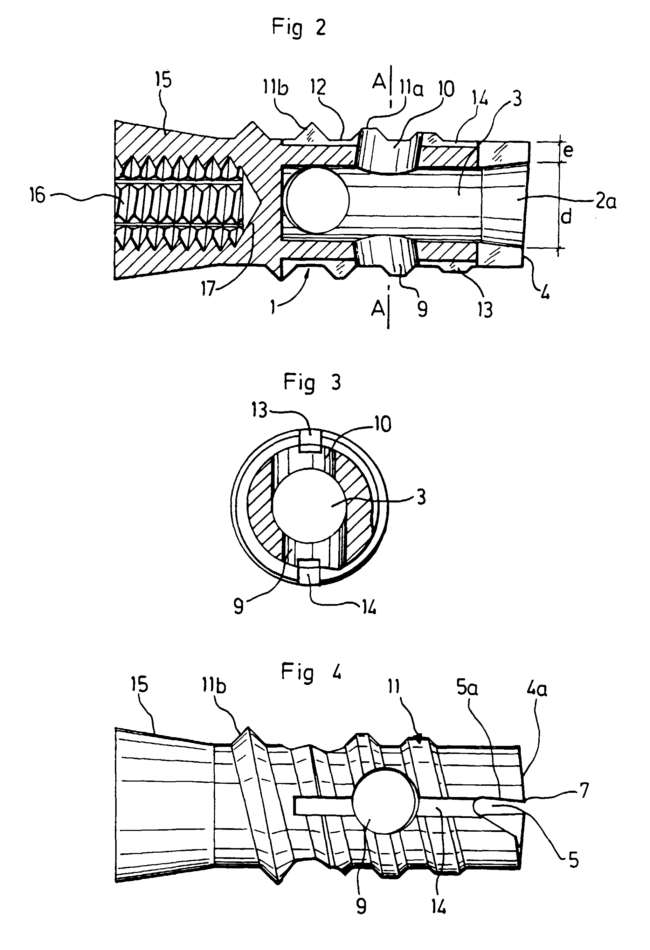

En premier lieu, l'implant dentaire représenté aux figures 1 à 4 comporte un tronçon distal tubulaire 1 comportant une paroi cylindrique 2 de révolution autour d'un axe délimitant un volume interne 3 d'emmagasinage de la matière osseuse.

Cette paroi cylindrique 2 comporte un tronçon d'extrémité distal 2a chanfreiné intérieurement conférant une forme tronconique évasée à la portion inférieure du volume interne d'emmagasinage 3, et formant une base transversale annulaire hélicoïdale 4 de diamètre interne "d" et de diamètre externe "d+2e".

Cette paroi cylindrique 2 comporte en outre deux échancrures distales 5, 6 ménagées symétriquement l'une de l'autre par rapport à l'axe longitudinal de l'implant dentaire, formant chacune une arête de coupe frontale 7, 8 au droit de la base transversale annulaire 4.

En outre, afin de ménager ces arêtes de coupe frontales 7, 8, chacune des échancrures 5, 6 forme une face d'attaque 5a, 6a inclinée d'un angle a de l'ordre de 4 à 10 degrés par rapport à l'axe longitudinal de l'implant, tandis que la base transversale annulaire 4 présente, entre chacune desdites échancrures, une forme hélicoïdale formant, pour chacune desdites arêtes de coupe frontales 7, 8, une face de dépouille 4a, 4b, inclinée d'un angle β de l'ordre de 4 à 10 degrés par rapport à un plan transversal.

De plus, la base transversale annulaire 4 est biaise de façon à être inclinée transversalement en direction du volume interne d'emmagasinage 3, d'un angle 6 de l'ordre de 4 à 10 degrés par rapport à un axe radial.

La paroi cylindrique 2 est en outre percée d'orifices tels que 9, 10 de calage secondaire disposés deux à deux en vis-à-vis symétriquement l'un de l'autre par rapport à l'axe longitudinal de l'implant dentaire, et dont l'axe de symétrie n'est pas sécant audit axe longitudinal de façon que chacun desdits orifices présente une arête de coupe complémentaire.

Ces orifices 9, 10, dont le nombre pair est fonction de la longueur de l'implant dentaire, sont répartis par paires sur la hauteur du tronçon distal 1 située au-dessus des échancrures 5, 6, et sont disposés de façon que chaque paire d'orifices soit décalée de 90 degrés par rapport à la (ou aux) paire(s) voisine(s).

De plus, l'axe de chacun de ces orifices 9, 10 est incliné en direction opposée à la base annulaire 4, de façon à amener les copeaux osseux à pénétrer naturellement dans le volume interne d'emmagasinage 3.

La paroi cylindrique 2 est par ailleurs dotée d'un filetage externe 11 dont l'extrémité distale démarre au-dessus des échancrures 5, 6, présentant une section progressive de forme trapézoïdale de hauteur croissante pour les premiers filets 11a, et de forme triangulaire pour les derniers filets 11b.

De plus, ces filets 11a, 11b sont espacés de façon à délimiter des sillons 12 de section trapézoïdale proportionnée par le pas et la hauteur du filet.

La paroi périphérique 2 comporte, enfin, deux goujures 13, 14, en l'exemple de section rectangulaire, ménagées longitudinalement dans le prolongement de chacune des échancrures 5, 6, et conçues pour présenter chacune une arête de coupe longitudinale qui permet d'initier l'action d'autotaraudage du filetage externe 11.

Ces goujures 13, 14 s'étendent en outre sur la portion de longueur du tronçon distal 1 pourvue d'un filetage externe 11 de section "tronquée" destiné à réaliser l'autotaraudage.

L'implant dentaire représenté aux figures 1 à 4 comporte en outre un tronçon proximal 15 de forme évasée tronconique, percé d'une empreinte axiale 16 de profondeur inférieure à celle dudit tronçon proximal de façon que le fond de ladite empreinte soit séparé du volume interne d'emmagasinage 3 par une épaisseur de matière 17.

Cette empreinte 16 présente la forme d'une étoile, par exemple du type des empreintes connues sous l'appellation "TORQ", inscrite dans un cercle, et dont les zones de matière formant les branches et délimitées par le cercle circonscrivant, sont taraudées.

De cette façon, cette empreinte 16 présente une forme adaptée pour coopérer avec un outil en forme d'étoile conjugué en vue de la mise en place de l'implant, et forme un orifice supérieur taraudé apte à permettre la mise en place d'un moignon.

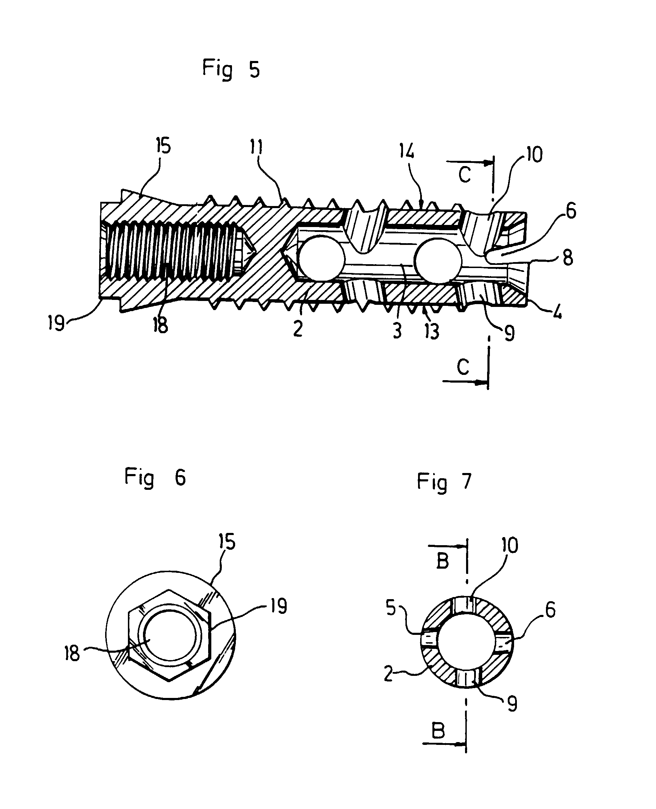

L'implant dentaire représenté aux figures 5 à 7 comporte, quant à lui, un tronçon distal de structure identique à celui de l'implant décrit ci-dessus (à cet effet et à des fins de simplification, les mêmes références numériques seront utilisées pour désigner des éléments similaires des deux variantes d'implant).

Cet implant dentaire comprend donc principalement : une paroi cylindrique 2 délimitant un volume interne d'emmagasinage 3, et dont l'extrémité distale présente deux échancrures 5, 6 et forme une base annulaire hélicoïdale 4 dotée de deux arêtes de coupe frontales telles que 8 au droit desdites échancrures, des orifices de calage secondaires 9, 10 (en l'exemple au nombre de huit), un filetage externe 11 et deux goujures 13, 14.

Cet implant dentaire comprend également un tronçon proximal 15 de forme évasée tronconique. Par contre, en lieu et place de l'empreinte 16, ce tronçon proximal 15 comporte, tel que certains des implants actuels, un alésage axial taraudé 18 destiné à la mise en place d'un moignon, et une tête 19 de forme hexagonale.

A titre d'exemple, les dimensions d'un implant dentaire tel que décrit ci-avant peuvent être les suivantes, données à titre indicatif :
- longueur totale de l'ordre de 17 mm,
- longueur du tronçon distal 1 de l'ordre de 13 mm,
- diamètre interne "d" de la base annulaire 4 : 2,6 mm,
- diamètre externe "d+2e" de la base annulaire : 3,4 mm,
- diamètre externe du filetage 11 : 4 mm,
- diamètre externe maximal du tronçon proximal 15 : 4,1 mm.

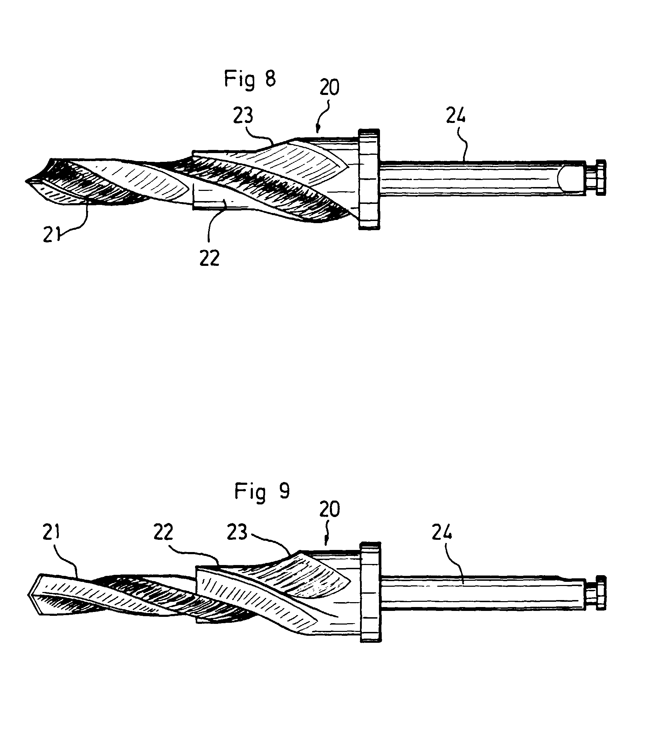

Tel que représenté aux figures 8, 9, le foret 20 destiné à réaliser la pré-loge implantaire de mise en place d'un implant dentaire conforme à l'invention est un foret hélicoïdal comportant deux rainures hélicoïdales, et se composant d'un tronçon distal 21 de diamètre compris entre "d" et "d+2e", d'un tronçon proximal 22 de diamètre "d+2e", et d'un tronçon supérieur 23 tronconique de forme conjuguée de la tête proximale 15 des implants, prolongé classiquement par une queue 24 de fixation sur un outil.

A titre d'exemple, pour un implant dentaire dont les dimensions correspondent à celles énoncées ci-dessus, un tel foret présentera un tronçon distal 21 d'un diamètre de 2,8 mm, et un tronçon proximal 22 d'un diamètre de 3,4 mm.

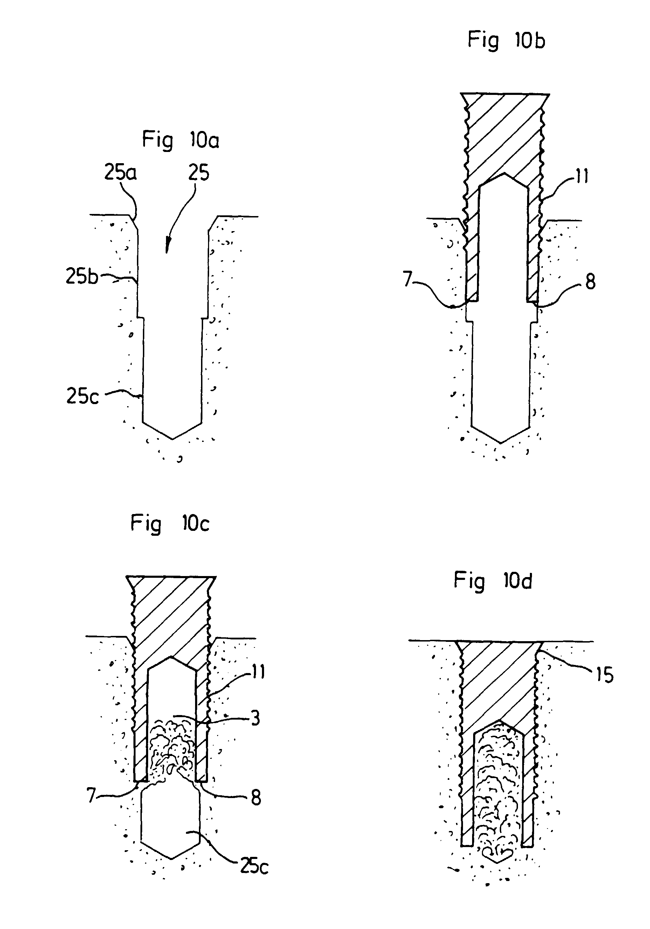

La figure 10 représente la pré-loge implantaire 25 obtenue au moyen d'un tel foret 20, après éventuellement réalisation préliminaire d'un pré-forage par exemple au moyen d'un foret d'un diamètre de 2 mm, comportant un évasement supérieur 25a, un alésage supérieur 25b d'un diamètre de 3,4 mm dans la partie corticale de l'os, et dans le prolongement de ce dernier, un alésage inférieur 25c d'un diamètre de 2,8 mm.

Lors de la mise en place de l'implant, et tel que représenté aux figures 10b à 10d, ce dernier a une action d'alésage de l'alésage inférieur 25c, réalisée grâce à la présence des arêtes de coupe frontales 7, 8, et au cours duquel la matière osseuse découpée vient s'emmagasiner à l'intérieur du volume interne 3.

De plus, cet implant a une action d'autotaraudage initiée par l'arête de coupe longitudinale des goujures 13 et 14 et réalisée par le filetage externe 11.

Par ailleurs, une fois mis en place, le tronçon proximal 15 de l'implant vient se loger dans l'évasement 25a en contact intime avec l'os.

La conception de cet implant permet, moyennant la réalisation d'un volume interne d'emmagasinage 3 adapté pour loger la matière osseuse découpée et dont les dimensions peuvent être à cet effet facilement déterminées (en prenant en compte éventuellement le volume d'emmagasinage des orifices de calage secondaire 9, 10 et des goujures 13, 14), d'obtenir un contact intime avec l'os et une stabilité primaire optimaux sans provoquer de compression de la matière osseuse découpée.

## Revendications

1. Equipement chirurgical d'implantologie dentaire comportant un instrument de forage et un implant dentaire endo-osseux, caractérisé en ce que :
- l'implant dentaire endo-osseux comprend :
∗ un tronçon proximal (15) comportant un organe (16 ; 19) de coopération avec un outil de pose dudit implant, et un orifice supérieur taraudé (16 ; 18) apte à permettre la mise en place d'un moignon,
∗ un tronçon distal tubulaire (1) comprenant une paroi cylindrique (2) de révolution autour d'un axe délimitant un volume interne (3) d'emmagasinage de la matière osseuse, et présentant une extrémité distale d'épaisseur "e" formant une base transversale annulaire (4) de diamètre interne "d" et de diamètre externe "d+2e", ladite paroi cylindrique comportant au moins une échancrure distale (5, 6) formant une arête de coupe frontale (7, 8) au droit de la base annulaire (4), délimitée par ladite base annulaire et une des faces (5a, 6a) de ladite échancrure conformées de façon à définir respectivement une face de dépouille (4a, 4b) et une face d'attaque (5a, 6a),
∗ un filetage externe (11) comportant au moins une arête distale de coupe (13, 14), ménagé sur ledit implant dentaire et démarrant à distance de la base annulaire (4) du tronçon distal (1),
- l'instrument de forage comporte un foret étagé (20) présentant un tronçon distal (21) de diamètre compris entre "d" et "d+2e" et un tronçon proximal (22) de diamètre au moins égal à "d+2e" et inférieur au diamètre externe du filetage (11) de l'implant dentaire.

2. Equipement chirurgical selon la revendication 1, caractérisé en ce que :
- le tronçon proximal (15) de l'implant dentaire comporte une portion d'extrémité supérieure évasée présentant une forme tronconique,
- le foret étagé (20) comporte un tronçon supérieur (23), prolongeant le tronçon proximal (22), de forme tronconique conjuguée de celle de l'implant dentaire.

3. Implant dentaire endo-osseux caractérisé en ce qu'il comprend :
- un tronçon proximal (15) comportant un organe (16 ; 19) de coopération avec un outil de pose dudit implant, et un orifice supérieur taraudé (16 ;18) apte à permettre la mise en place d'un moignon,
- un tronçon distal tubulaire (1) comprenant une paroi cylindrique (2) de révolution autour d'un axe délimitant un volume interne (3) d'emmagasinage de la matière osseuse, et présentant une extrémité distale d'épaisseur "e" formant une base transversale annulaire (4) de diamètre interne "d" et de diamètre externe "d+2e", ladite paroi cylindrique comportant au moins une échancrure distale (5, 6) formant une arête de coupe frontale (7, 8) au droit de la base annulaire (4), délimitée par ladite base annulaire et une des faces (5a, 6a) de ladite échancrure conformées de façon à définir respectivement une face de dépouille (4a, 4b) et une face d'attaque (5a, 6a),
- un filetage externe (11) comportant au moins une arête distale de coupe (13, 14), ménagé sur ledit implant dentaire et démarrant à distance de la base annulaire (4) du tronçon distal (1).

4. Implant dentaire selon la revendication 3, caractérisé en ce qu'il comporte une portion d'extrémité supérieure (15) présentant une forme tronconique.

5. Implant dentaire selon l'une des revendications 3 ou 4, caractérisé en ce que la paroi cylindrique (2) du tronçon distal (1) présente une extrémité distale biaise formant une base annulaire (4) inclinée transversalement en direction du volume interne (3) délimité par ladite paroi périphérique.

6. Implant dentaire selon l'une des revendications 3 à 5 caractérisé en ce que le volume interne d'emmagasinage (3) présente, à partir de la base annulaire (4), une portion de volume (2a) de forme tronconique évasée en direction de ladite base annulaire.

7. Implant dentaire selon l'une des revendications 3 à 6, caractérisé en ce que la paroi cylindrique (2) du tronçon distal (1) comprend deux échancrures (5, 6) ménagées symétriquement l'une de l'autre par rapport à l'axe longitudinal dudit implant dentaire, la base annulaire (4) présentant entre chacune desdites échancrures une forme hélicoïdale formant une face de dépouille (4a, 4b) pour chaque arête de coupe frontale (7, 8).

8. Implant dentaire selon l'une des revendications 3 à 7, caractérisé en ce que la paroi cylindrique (2) du tronçon distal (1) comporte au moins une goujure longitudinale (13, 14) ménagée sur la face externe de ladite paroi, de section transversale adaptée pour former une arête de coupe longitudinale.

9. Implant dentaire selon la revendication 8, caractérisé en ce que chaque goujure (13, 14) s'étend à partir de la base annulaire (4) de la paroi cylindrique (2) et se trouve décalée angulairement par rapport à chaque échancrure (5, 6).

10. Implant dentaire selon la revendication 8, caractérisé en ce que chaque goujure (13, 14) s'étend dans le prolongement d'une échancrure (5, 6).

11. Implant dentaire selon l'une des revendications 3 à 10, caractérisé en ce que le filetage externe (11) présente, à partir de son extrémité distale, des premiers filets (11a) de section trapézoïdale prolongés par des filets (11b) de section triangulaire, formant un filetage de section progressive.

12. Implant dentaire selon la revendication 11, caractérisé en ce que les filets (11a, 11b) du filetage externe (11) sont espacés de façon à délimiter des sillons (12) de section trapézoïdale.

13. Implant dentaire selon l'une des revendications 3 à 12, caractérisé en ce que la paroi cylindrique (2) du tronçon distal (1) comporte des orifices (9, 10) de calage secondaire circulaires dont l'axe est non sécant par rapport à l'axe de révolution dudit implant.

14. Implant dentaire selon la revendication 13, caractérisé en ce que l'axe de chaque orifice de calage secondaire (9, 10) est incliné en direction du tronçon proximal (15) dudit implant dentaire.

15. Implant dentaire selon l'une des revendications 3 à 14, dans lequel l'organe de coopération du tronçon proximal (15) consiste en une tête (19) de section polygonale.

16. Implant dentaire selon l'une des revendications 3 à 14, caractérisé en ce que l'orifice supérieur consiste en une empreinte taraudée (16) de forme conçue pour faire également office de réservation adaptée pour coopérer avec un outil de pose dudit implant.

17. Equipement chirurgical caractérisé en ce qu'il comprend un implant dentaire défini dans l'une quelconque des revendications 3 à 16.

## Patentansprüche

1. Chirurgische Ausrüstung für die Zahnimplantologie, die ein Bohrinstrument und ein endoknöchernes Zahnimplantat aufweist, dadurch gekennzeichnet, dass:
- das endoknöcherne Zahnimplantat
* ein proximales Teilstück (15) aufweist, das ein Kooperationselement (16; 19) für ein Werkzeug zum Einsetzen des Implantats und eine obere, mit einem Innengewinde versehene, zur Aufnahme eines Stumpfes angepasste Öffnung (16; 18)
* ein distales, röhrenförmiges Teilstück (1) aufweist, das eine zylindrische Wandung (2) zur Rotation um eine ein internes Volumen (3) zur Aufnahme der Knochenmaterial begrenzende Achse umfasst, und das unter Bildung einer transversalen, ringförmigen Basis (4) mit einem internen Durchmesser "d" und einem externen Durchmesser "d+2e" ein distales Ende mit einer Dickte "e" darstellt, wobei die zylindrische Wandung mindestens eine distale Einbuchtung (5, 6) aufweist, die an die ringförmige Basis (4) eine frontseitige Schnittkante (7, 8) bildet, und die durch die ringförmige Basis und eine der Flächen (5a, 6a) der Einbuchtung begrenzt ist, wobei diese Flächen solcherart angepasst sind, dass sie jeweils eine Freifläche (4a, 4b) und eine Angriffsfläche (5a, 6a) bestimmen,
* ein Außengewinde (11), das mindestens eine distale Schnittkante (13, 14) aufweist, und das auf dem Zahnimplantat ausgespart ist und in Abstand der ringförmigen Basis (4) des distalen Teilstücks (1) beginnt,
- das Bohrinstrument einen Stufenbohrer (20) enthält, der ein distales Teilstück (21) mit einem Durchmesser zwischen "d" und "d+2e" und ein proximales Teilstück (22) mit einem Durchmesser von mindestens gleich "d+2e" und geringer als der externe Durchmesser des Gewindes (11) des Zahnimplantats aufweist.

2. Chirurgische Ausrüstung gemäß Anspruch 1, dadurch gekennzeichnet, daß:
- das proximale Teilstück (15) des Zahnimplantats einen ausgeweiteten oberen Endabschnitt aufweist, der eine kegelstumpfförmige Form darstellt,
- der Stufenbohrer (20) ein das proximale Teilstück (22) verlängendes, oberes, kegelstumpfförmiges Teilstück (23) aufweist, deren Form derjenigen des Zahnimplantats zugeordnet ist.

3. Endoknöchernes Zahnimplantat, dadurch gekennzeichnet, dass es
- ein proximales Teilstück (15) aufweist, das ein Kooperationselement (16; 19) für ein Werkzeug zum Einsetzen des Implantats und eine obere, mit einem Innengewinde versehene, zur Aufnahme eines Stumpfes angepasste Öffnung (16; 18)
- ein distales, röhrenförmiges Teilstück (1) aufweist, das eine zylindrische Wandung (2) zur Rotation um eine ein internes Volumen (3) zur Aufnahme der Knochenmaterial begrenzende Achse umfasst, und das unter Bildung einer transversalen, ringförmigen Basis (4) mit einem internen Durchmesser "d" und einem externen Durchmesser "d+2e" ein distales Ende mit einer Dickte "e" darstellt, wobei die zylindrische Wandung mindestens eine distale Einbuchtung (5, 6) aufweist, die an die ringförmige Basis (4) eine frontseitige Schnittkante (7, 8) bildet, und die durch die ringförmige Basis und eine der Flächen (5a, 6a) der Einbuchtung begrenzt ist, wobei diese Flächen solcherart angepasst sind, dass sie jeweils eine eine Freifläche (4a, 4b) und eine Angriffsfläche (5a, 6a) bestimmen,
- ein Außengewinde (11), das mindestens eine distale Schnittkante (13, 14) aufweist, und das auf dem Zahnimplantat ausgespart ist und in Abstand der ringförmigen Basis (4) des distalen Teilstücks (1) beginnt.

4. Zahnimplantat gemäß Anspruch 3, dadurch gekennzeichnet, dass es einen oberen Endabschnitt (15) aufweist, der eine kegelstumpfförmige Form darstellt.

5. Zahnimplantat gemäß einem der Ansprüche 3 oder 4, dadurch gekennzeichnet, dass die zylindrische Wandung (2) des distalen Teilstücks (1) ein distales, schräges, transversal in Richtung des inneren, durch die periphere Wandung begrenzten Volumens (3) geneigtes Ende aufweist, das eine ringförmige Basis (4) bildet.

6. Zahnimplantat gemäß einem der Ansprüche 3 bis 5, dadurch gekennzeichnet, dass das interne Volumen zur Aufnahme (3) ausgehend von der ringförmigen Basis (4) einen Volumenabschnitt (2a) in kegelstumpfförmiger Form aufweist, der sich in Richtung der ringförmigen Basis erweitert.

7. Zahnimplantat gemäß einem der Ansprüche 3 bis 6, dadurch gekennzeichnet, dass die zylindrische Wandung (2) des distalen Teilstücks (1) zwei symmetrisch, in Bezug auf die longitudinale Achse des Zahnimplantats gegenüber angebrachte Einbuchtungen (5, 6) umfasst, wobei die ringförmig Basis (4) zwischen jeder Einbuchtung eine schraubenförmige Form aufweist und eine Freifläche (4a, 4b) für jede frontseitige Schnittkante (7, 8) bildet.

8. Zahnimplantat gemäß einem der Ansprüche 3 bis 7, dadurch gekennzeichnet, dass die zylindrische Wandung (2) des distalen Teilstücks (1) mindestens einen longitudinalen Einschnitt (13, 14) aufweist, der auf der äußeren Seite der Wandung angebracht ist, wobei der longitudinale Einschnitt einen Queschnitt aufweist, der so angepesst ist, um eine longitudinale Schnittkante zu bilden.

9. Zahnimplantat gemäß Anspruch 8, dadurch gekennzeichnet, dass jeder Einschnitt (13, 14) sich von der ringförmigen Basis (4) der zylindrischen Wandung (2) ausgehend erstreckt und in Bezug auf jede Einbuchtung (5, 6) winkelig verschoben ist.

10. Zahnimplantat gemäß Anspruch 8, dadurch gekennzeichnet, dass jeder Einschnitt (13, 14) sich in der Verlängerung einer Einbuchtung (5, 6) erstreckt.

11. Zahnimplantat gemäß einem der Ansprüche 3 bis 10, dadurch gekennzeichnet, dass das Außengewinde (11) ausgehend von seinem distalen Ende ersten Schraubenwindungen (11a) von trapezoidem Querschnitt aufweist und durch Schraubenwindungen (11b) von dreieckigem Querschnitt weitergeführt sind und dabei ein Gewinde von progressivem Querschnitt formt.

12. Zahnimplantat gemäß Anspruch 11, dadurch gekennzeichnet, dass die Schraubenwindungen (11a, 11b) des Außengewindes (11) solcherart auseinandergerückt sind, um die Rillen (12) des trapezoiden Abschnittes zu begrenzen.

13. Zahnimplantat gemäß einem der Ansprüche 3 bis 12, dadurch gekennzeichnet, dass die zylindrische Wandung (2) des distalen Teilstücks (1) Öffnungen (9; 10) zur sekundären, kreisförmigen Verkeilung aufweist, deren Achse in Bezug auf die Rotationsachse des Implantats nicht schneidend ist.

14. Zahnimplantat gemäß Anspruch 13, dadurch gekennzeichnet, dass jede Öffnung zur sekundären Verkeilung (9, 10) in Richtung des proximalen Teilstücks (15) des Zahnimplantats geneigt ist.

15. Zahnimplantat gemäß einem der Ansprüche 3 bis 14, dadurch gekennzeichnet, dass das Kooperationselement des proximalen Teilstücks (15) aus einem Kopf (19) mit einem polygonalen Querschnitt besteht.

16. Zahnimplantat gemäß einem der Ansprüche 3 bis 14, dadurch gekennzeichnet, dass die obere Öffnung aus einem Innengewindeabdruck (16) besteht, der so ausgebildet ist, um gleichermaßen als Reservation zu dienen und angepasst ist, um mit einem Werkzeug zum Einsetzen des Implantats zusammenzuwirken.

17. Chirurgische Ausrüstung, dadurch gekennzeichnet, dass sie ein Zahnimplantat umfasst, wie in einem der Ansprüche 3 bis 16 bestimmt.

## Claims

1. Surgical equipment for dental implantology comprising a drilling instrument and an endosseous dental implant, characterized in that:
- the endosseous dental implant consists of:
* a proximal section (15) comprising a device for attachment (16; 19) to a placement tool for said implant and a threaded upper aperture (16; 18) capable of making possible the insertion of a stump,
* a tubular distal section (1) comprising a cylindrical wall (2) of rotation about an axis defining an internal storage volume (3) for the osseous tissue and having a distal end of thickness "e" forming an annular transverse base (4) of internal diameter "d" and external diameter "d + 2e", said cylindrical wall comprising at least one distal indentation (5, 6) forming a cutting front edge (7, 8) at the annular base (4), defined by said annular base and one of the faces (5a, 6a) of said indentation shaped so as to define a relief face (4a, 4b) and a cutting face (5a, 6a),
* an external thread (11) comprising at least one distal cutting edge (13, 14) arranged on said dental implant and starting at a distance from the annular base (4) of the distal section (1),
- the drilling instrument consists of a stepped drill (20) possessing a distal section (21) of diameter included between "d" and "d + 2e" and a proximal section (22) of diameter at least equal to "d + 2e" and less than the external thread diameter (11) of the dental implant.

2. Surgical equipment according to Claim 1, characterized in that :
- the proximal section (15) of the dental implant comprises a widened upper end portion in the shape of a truncated cone,
- the stepped drill (20) comprises an upper section (23), forming an extension of the proximal section (22) and in the shape of a truncated cone conjugated with that of the dental implant.

3. Endosseous dental implant, characterized in that it comprises :
- a proximal section (15) comprising a device for attachment (16; 19) to a placement tool for said implant, and a threaded upper aperture (16; 18) capable of making possible the insertion of a stump,
- a tubular distal section (1) comprising a cylindrical wall (2) of rotation about an axis defining an internal storage volume (3) for the osseous tissue and having a distal end of thickness "e" forming an annular transverse base (4) of internal diameter "d" and external diameter "d + 2e", said cylindrical wall comprising at least one distal indentation (5, 6) forming a cutting front edge (7, 8) at the annular base (4), defined by said annular base and one of the shaped faces (5a, 6a) of said indentation shaped so as to define a relief face (4a, 4b) and a cutting face (5a, 6a).
- an external thread (11) comprising at least one distal cutting edge (13, 14) arranged on said dental implant and starting at a distance from the annular base (4) of the distal section (1),

4. Dental implant according to Claim 3, characterized in that it comprises a truncated cone-shaped upper end portion (15).

5. Dental implant according to either of the Claims 3 or 4, characterized in that the cylindrical wall (2) of the distal section (1) possesses a skewed distal end forming an annular base (4) transversally inclined in the direction of the internal volume (3) defined by said peripheral wall.

6. Dental implant according to one of the Claims 3 to 5, characterized in that the internal storage volume (3) possesses starting from the annular base (4), a truncated cone-shaped volume portion (2a) widening in the direction of said annular base.

7. Dental implant according to one of the Claims 3 to 6, characterized in that the cylindrical wall (2) of the distal section (1) comprises two indentations (5, 6) arranged symmetrically to each other with respect to the longitudinal axis of said dental implant, the annular base (4) between each of said indentations has a helicoidal shape forming a relief face (4a, 4b) for each cutting front edge (7, 8).

8. Dental implant according to one of the Claims 3 to 7, characterized in that the cylindrical wall (2) of the distal section (1) comprises at least one longitudinal indentation notch (13, 14) arranged on the external face of said wall, of transverse section adapted to form a longitudinal cutting edge.

9. Dental implant according to Claim 8, characterized in that each indentation notch (13, 14) extends from the annular base (4) of the cylindrical wall (2) and is displaced at an angle to each indentation (5, 6).

10. Dental implant according to Claim 8, characterized in that each indentation notch (13, 14) extends in the prolongation of an indentation (5, 6).

11. Dental implant according to one of the Claims 3 to 10, characterized in that the external thread (11) possesses from its distal end initial threads (11a) of trapezoidal cross-section extended by threads (11b) of triangular cross-section, forming a screw thread of progressive cross-section.

12. Dental implant according to Claim 11, characterized in that the threads (11a, 11b) of the external threading (11) are spaced so as to define grooves (12) of trapezoidal cross-section.

13. Dental implant according to one of the Claims 3 to 12, characterized in that the cylindrical wall (2) of the distal section (1) comprises circular secondary wedging apertures (9, 10) the axis of which is non-intersecting with respect to the axis of rotation of said implant.

14. Dental implant according to Claim 13, characterized in that the axis of each secondary wedging apertures (9, 10) is inclined in the direction of the proximal section (15) of said dental implant.

15. Dental implant according to one of the Claims 3 to 14, in which the attachment element of the proximal section (15) consists of a head (19) of polygonal cross-section.

16. Dental implant according to one of the Claims 3 to 14, characterized in that the upper opening consists of a threaded mould (16) of a shape designed to also serve as reserve adapted to cooperate with an insertion tool for said implant.

17. Surgical equipment characterized in that it comprises a dental implant defined in anyone of the Claims 3 to 16.
